# FASCICULE DE BREVET EUROPEEN

(11) **EP 2 095 077 B1**
(45) Date de publication et mention de la délivrance du brevet: **27.07.2011**
(21) Numéro de dépôt: 07847423.6
(22) Date de dépôt: 27.11.2007
(51) Int. Cl.: G01C 23/00, B64D 45/04

(54) **DISPOSITIF DE VISUALISATION DESTINE A LA COMPRÉHENSION DE L'ENVIRONNEMENT AÉRIEN**
ANZEIGEVORRICHTUNG ZUR ERFASSUNG DER LUFTUMGEBUNG
VIEWING DEVICE INTENDED FOR COMPREHENDING THE AERIAL ENVIRONMENT

(30) Priorité: 28.11.2006 FR 0610400
(43) Date de publication de la demande: 02.09.2009
(73) Titulaire: Thales, 92200 Neuilly Sur Seine (FR)
(72) Inventeur: FILLIATRE, Eric, 33700 Merignac (FR); NETO, Philippe, 33320 Eysines (FR)
(74) Mandataire: Esselin, Sophie
(86) Numéro de dépôt international: PCT/EP2007/062898
(87) Numéro de publication internationale: WO 2008/065120

(56) Documents cités:
- EP-A- 0 911 647
- FR-A1- 2 535 879
- FR-A1- 2 826 762
- US-A- 5 781 146
- US-A1- 2004 217 883

## Description

La présente invention concerne les dispositifs de visualisation de représentations graphiques de l'environnement aérien. Elle s'applique, plus particulièrement, aux systèmes de représentations graphiques relatifs à la perception de la situation, appelée « Situation awareness » selon la terminologie anglo-saxonne.
Généralement, les données, issues de ces représentations, sont corrélées à des données cartographiques. Elles peuvent être de type météorologique ou topologique, par exemple.
Le dispositif selon l'invention introduit une ergonomie de différentes représentations graphiques superposées notamment par des règles de couleur et de transparence qui dépendent des données elles-même.

Actuellement, dans les aéronefs de type avions ou hélicoptères, civils et militaires, il existe des équipements dédiés aux représentations graphiques de l'environnement lié à l'aéronef, et de l'environnement indépendant de l'aéronef.
Les systèmes de représentation de l'environnement lié à l'aéronef dépendent des données propres à l'aéronef, comme les données systèmes, la trajectoire, les données d'altimétries ou les ressources dudit aéronef. Le pilote est constamment informé de ces données. Ces données sont majeures pour la navigation et sont calculées et rafraîchies à chaque cycle de calculs du calculateur avionique. Elles peuvent, notamment, servir à d'autres applications qui nécessitent des informations propres à l'aéronef en tant que données d'entrées pour effectuer d'autres calculs. Ces données peuvent être typiquement le cap de l'aéronef ou sa position dans l'espace, par exemple.
Pour permettre au pilote une navigation en connaissance de l'environnement afin de minimiser les dangers, les données liées à l'environnement de l'aéronef sont corrélées aux données environnementales indépendantes de l'aéronef. Ces données peuvent être du type topologique ou météorologique, par exemple. Elles peuvent être issues d'une base de données, comme les données de terrain ou capturées, calculées et traitées en temps réel, comme les données météorologiques ou les prédictions de collision terrain.
La corrélation de ces données permet, par exemple, pour un cap déterminé et une trajectoire connue, de connaître et de prédire les dangers potentiels liés à la situation de l'aéronef dans son environnement extérieur, la prédiction s'évaluant dans un futur proche avec l'hypothèse que le cap et la trajectoire de l'aéronef restent inchangés. Des écrans de visualisation ou des alarmes sont usuellement utilisés afin d'alerter le pilote.
Un des principaux intérêts de telles fonctions est d'évaluer des risques potentiels, notamment, de collisions, de turbulences fortes ou encore de foudre qui induiraient une diminution de la sécurité du vol.
Il existe plusieurs systèmes de représentation de l'environnement lié à l'aéronef, qui dépendent chacun des données propres à une application donnée.
Un exemple de système d'analyse de données environnementales existant est le système WXR, nom commercial donné au produit développé et commercialisé par Rockwell Collins, qui signifie, en français, « Système de Radar Météorologique ». Cet équipement est utilisé dans de nombreux aéronefs. Il est constitué d'une antenne radar, qui balaie en permanence un secteur angulaire situé devant le porteur sur une distance paramétrable. Cet équipement analyse l'atmosphère pour récupérer des données météorologiques et les fournir au pilote.
A partir des données acquises en temps réel, l'équipement WXR est capable de fournir aux autres systèmes du porteur des informations météorologiques digitalisées. Ces informations permettent, alors, dans le cas de systèmes d'affichage du cockpit de faire un rendu du secteur balayé sur un écran et d'afficher ainsi à l'équipage les informations météorologiques relativement à la position du porteur.
Par ailleurs, un autre exemple de tels systèmes, est le système TAWS, dont l'acronyme anglo-saxon signifie « Terrain Awareness Warning System », dont la traduction, en français, est système d'alarmes de prise de conscience du terrain. Le système a été développé et commercialisé par Thales en collaboration avec L-3 Communications, sous le nom T2CAS.

Plus généralement, le TAWS est un système qui, par rapport à des données d'altimétrie issues d'une base de données numériques, génère un affichage graphique et le cas échéant des alarmes sonores sur la base d'un calcul qui prend en compte :
- la position du porteur, ainsi que divers paramètres de vol notamment sa vitesse et son cap ;
- les extrapolations de la trajectoire du porteur pour réaliser des calculs de prédiction ;
- les caractéristiques du porteur en terme de performance, notamment en ce qui concerne les phases de montée d'urgence à performances maximales.
A l'issue de ce calcul, le TAWS restitue à l'équipage graphiquement ou sous forme d'alarmes sonores :
- la tranche d'altitude dans laquelle le porteur se situe relativement au terrain alentour.
- les zones du terrain qui peuvent à brève échéance mettre en danger la sécurité du vol si l'équipage ne modifie pas la trajectoire du porteur
- les zones du terrain qui mettent en danger la sécurité du vol si l'équipage ne modifie pas immédiatement la trajectoire du porteur

Le TAWS est une fonction qui est embarquée sur des calculateurs avioniques temps réel.

Un autre exemple d'application est le système de représentation cartographique de la topologie du terrain. Ce système, au moyen d'une base de données numériques connues, construit une représentation graphique du terrain et de ses attributs, tels que les ombrages, les données vectorielles et les obstacles.
En particulier dans les aéronefs, la représentation graphique du terrain est asservie pour un cycle de calcul donné par la position courante du porteur et par rapport à son cap. Plusieurs modes de représentation du terrain et de positionnement du porteur sur le terrain sont disponibles selon les contextes opérationnels.

FR-A1-2 826 762 décrit un dispositif de visualisation de l'environnement aérien pour aéronef comprenant des moyens de visualisation affichant l'environnement aérien avec des zones colorées, chaque couleur étant associée à un niveau de danger pour l'aéronef.

En ce qui concerne l'harmonisation des graphiques, issus des différentes applications, la structure des données et la discrétisation des informations dépend notamment de chaque application et des protocoles utilisés. Par exemple les applications TAWS et WXR structurent leurs données numériques selon des radiales.
Par ailleurs, la fonction cartographique utilise un autre mode de structure de données.

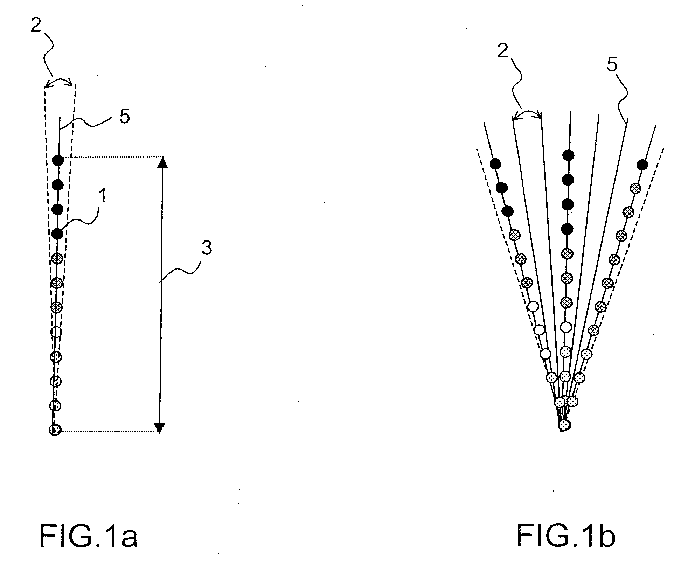

Dans ce cadre, la figure 1a représente la numérisation d'informations collectées, dans l'espace ou à partir d'une base de données sous forme de radiales. Une radiale 5 est orientée suivant un angle proche du cap de l'aéronef. Dans l'application TAWS, la radiale possède une portée 3 correspondant au point le plus éloigné dans la zone numérisée. Cette radiale comporte un certain nombre de points 1. Chacun des points numérise une information, notamment calculée à partir de l'altitude du point mesuré. Le point représente notamment un danger pour l'aéronef dans un futur proche si le cap ne change pas. Le point fait partie d'une zone qui possède un code de couleurs qui indique au pilote le danger potentiel dans la direction de la radiale. Les radiales possèdent une ouverture, représentée par un angle 2. A une distance donnée de l'aéronef, le point discrétise le danger dans un périmètre compris dans l'angle 2 et entre le point aval et le point amont du point considéré.

L'application TAWS rafraîchit un ensemble de radiales dans un temps de calcul déterminé et les présente sous forme graphique au pilote. La figure 1b représente un ensemble de radiales numérisant une partie de l'espace formant un secteur angulaire, situé devant l'aéronef.

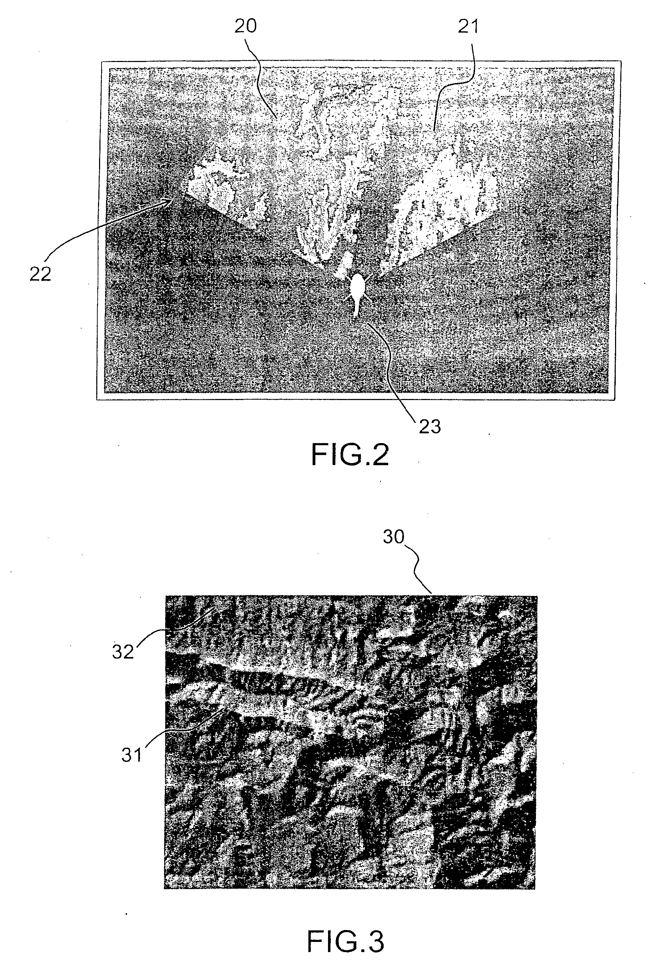

La figure 2 représente un graphique d'un exemple de l'application TAWS. Il représente un secteur angulaire 22 numérisé par les points de chaque radiale. Chaque point représenté comporte une information de couleur relative au danger, ledit danger étant estimé à partir de l'altitude de l'aéronef extrapolée dans un futur proche. Ce secteur angulaire comprend donc des zones de différentes teintes ou couleurs. Cette zone couvre un angle large centré sur le cap de l'aéronef 23. Certaines teintes 20 représentent un danger si l'aéronef se dirige vers cette zone, d'autres teintes 21 signifient qu'aucun danger de collision est visible dans cette direction.

La figure 3 représente une cartographie 30 du relief que l'aéronef survole. La zone 31 représente un relief qui pourrait être une montagne ou une colline, la zone 32 représente un espace de bas relief.

Un inconvénient des solutions telles que développées, sont leur relative indépendance et leur utilisation exclusive qui nécessite par exemple d'intégrer dans la cabine de pilotage autant d'écrans de visualisation que d'applications. Par exemple, chacune des trois applications précitées, l'application cartographie, l'application météorologique, et l'application d'altimétrie, possède des ressources graphiques et un afficheur dédiés.
L'exclusivité des applications impose au pilote soit de changer manuellement de représentation graphique sur un même écran selon l'application, soit de suivre différents écrans pendant la phase de pilotage.
Dans le cas d'une superposition de représentations graphiques, un inconvénient majeur revient à choisir la représentation qui est affichée en priorité au pilote. Dans le cas d'une superposition de données issues d'applications différentes, le problème du masquage éventuel de certaines données par un graphique peut constituer un inconvénient important.
Ces inconvénients pré-cités deviennent encore plus cruciaux lorsqu'il est nécessaire de reconnaître des zones de danger pour l'aéronef. La dangerosité d'une zone géographique évolue continuellement lors d'un vol effectué par un aéronef. La représentation des zones de risques ou de dangers d'une application donnée n'est pas différenciée dans les priorités d'affichage des représentations graphiques qui sont superposées.

Un des objectifs du dispositif selon l'invention est de fournir au pilote une aide accrue à l'appréciation de l'environnement aérien. L'intégration des données graphiques, notamment des exemples pré-cités, ayant des composantes communes constitue une aide à la décision pour le pilote.

Le dispositif selon l'invention se situe dans le cadre de l'intégration et de la superposition des données issues des différentes applications. En particulier, il s'agit d'intégrer la notion de zone de danger et de graduer celle-ci par des couleurs et une loi de transparence. L'objectif est de représenter à l'écran une superposition intégrant des zones de priorité d'affichage évoluant continuellement, de l'un des graphiques, adéquates et pratiques pour le pilote.

Un avantage de fonctionnement pour le pilote est de disposer d'un affichage commun des différentes applications lorsque celles-ci présentent des similitudes topologiques ou géographiques. Par exemple, la représentation des données TAWS et la représentation de la fonction cartographique peuvent se superposer. Cette solution offre au pilote un confort visuel et une facilité accrue d'aide à la décision en cas d'un danger imminent. De même, l'application météorologique WXR est également superposable à la fonction cartographique, ainsi que toutes autres applications destinées à représenter des données graphiques sur un afficheur.
Dans le cadre d'une représentation commune des différentes représentations graphiques, il est nécessaire de représenter les informations issues d'applications différentes sans altérer ou masquer une partie des informations importantes de l'une des applications.

Avantageusement, le dispositif de visualisation de l'environnement aérien pour aéronef comprend des moyens de visualisation, un calculateur avionique, des moyens de génération d'images et des moyens de calculs comprenant :
- une première ressource de traitement de données, les données étant une représentation graphique de l'environnement aérien composée de zones colorées, chaque couleur étant associée à un niveau de danger pour l'aéronef, lesdites données étant appelées données environnementales ;
- une seconde ressource de traitement de données, lesdites données étant appelées données cartographiques.

Le dispositif comporte un mélangeur graphique permettant à la représentation graphique issue des données environnementales de se superposer à la représentation des données cartographiques sur un même écran de visualisation, chaque zone d'une même couleur de la représentation de données environnementales ayant un coefficient de transparence fonction du niveau de danger.

Avantageusement, les données cartographiques représentent des données numériques de terrain.
Avantageusement, les données environnementales numérisent un secteur angulaire (θ₀) de part et d'autre du cap d'un aéronef, ledit secteur angulaire ayant une portée constante (L) et point d'origine définie par la position courante de l'aéronef ou une position de référence de laquelle est issu le calcul.

Avantageusement, les données environnementales peuvent numériser un secteur angulaire (θ₀) de part et d'autre du cap d'un aéronef, ledit secteur angulaire ayant une portée constante (L) et un point d'origine définie par un point de référence.

Avantageusement, les données environnementales sont des données de prédiction de collision sol, comme par exemple les données provenant du système TAWS, dont la terminologie anglo-saxonne est Terrain Awareness Warning System.
Avantageusement, les zones de danger sont discrétisées en fonction des risques de collision.
Avantageusement, les données environnementales sont des données météorologiques, comme par exemple les données provenant du système WXR, dont la terminologie anglo-saxonne est Weather Radar System.
Avantageusement, les zones de danger sont discrétisées en fonction d'évènements météorologiques répertoriés.
Avantageusement, la loi de transparence attribue une transparence totale au niveau des zones sans danger, et donc n'est pas représenté par les moyens de visualisation.

Avantageusement, la loi de transparence attribue une opacité adaptée au niveau du danger.
- la figure 1 a et 1 b : La discrétisation des données en radiales ;
- la figure 2 : La représentation graphique des données d'une application de prédiction de collision sol ;
- la figure 3 : La représentation des données de l'application cartographie ;
- la figure 4a : La représentation des zones de différentes couleurs associées aux différents dangers de l'environnement ;
- la figure 4b : La représentation des différentes zones et leur transparence lorsqu'elles sont affichées sur un écran de visualisation ;
- la figure 5 : La représentation des données cartographiques simplifiées à des formes géométriques élémentaires ;
- la figure 6 : La représentation de la superposition des données issues de l'application de prédiction de collision sol et des données cartographiques ;
- La figure 7 : La superposition de données des applications cartographies et de prédiction de collision sol.

L'objet de l'invention consiste à réaliser différents modes de combinaisons graphiques entre différents types de données fournies par des applications, par exemple des applications TAWS ou WXR et de la fonction cartographique.
Il s'agit de mettre en oeuvre des lois de mélange qui permettent, indépendamment du mode de combinaison graphique, de conserver la perception des couleurs issues des différentes applications, comme le TAWS ou du WXR. Cette combinaison permet de ne pas détériorer l'interprétation de l'information présentée et de préserver ainsi l'intégrité des données.

Un exemple de réalisation est la superposition, sur un même écran de visualisation, des données de l'application TAWS et des données issues de la fonction cartographique.
Le raisonnement est tout aussi valable dans le cas d'un WXR ou toute autre application disposant d'une représentation graphique identique de données de type radiale.

Pour superposer les données du TAWS aux données cartographiques, les différents modes de combinaisons graphiques conservent la visibilité les données produites par le TAWS. Il est possible d'intégrer de différentes manières les données de l'application TAWS aux données de terrain.
En premier lieu il est nécessaire de considérer les couleurs des zones de danger issues des données de l'application TAWS. Celles-ci sont affichées suivant le danger avec l'application d'un coefficient de transparence relative au danger également. Par exemple, une couleur rouge peut correspondre aux zones les plus dangereuses, et une couleur noire aux zones les moins dangereuses. Les couleurs des zones de danger intermédiaires sont graduées d'une couleur rouge à une couleur verte. Les teintes de ces couleurs peuvent donner une indication de danger également, par exemple une couleur claire et une couleur foncée.
Les zones de danger, dans le cas de l'application TAWS, peuvent être définies par l'altitude de l'aéronef, ladite altitude étant extrapolée et comparée à la topologie du terrain. La couleur dans ce cas représente des tranches d'altitudes extrapolées. Les zones de plus forts dangers représentent des cas de collisions éventuelles de l'aéronef avec le relief, telle qu'une montagne par exemple.
Par exemple, une règle d'opacité totale appliquée aux zones les plus dangereuses du graphique représentant les données de l'application TAWS, donne une priorité à la représentation graphique de ces données sur le fond coloré qui représente le terrain.

La couleur d'un pixel, noté C, ledit pixel étant représenté sur un écran de visualisation, est issue du mélange de la couleur, noté C1, du point considéré issu des données cartographiques et de la couleur, noté C2, de ce même point issu des données de l'application TAWS.
Un exemple de loi de transparence peut être C= (1-α)·C2 + α·C1, α étant le coefficient de transparence, tel que α varie de 0 à 1. La valeur 0 correspondante à aucune transparence du graphique représentant les données de l'application TAWS, et la valeur 1 correspondante à une transparence complète de ce même graphique.

Un premier mode de combinaison consiste à superposer les deux graphiques en appliquant une transparence totale aux données correspondant aux zones les moins dangereuses, et une opacité totale pour les données correspondant aux zones à risque. La zone la moins dangereuse correspondent, généralement, à des plaines ou des vallées. Il n'y a alors, à priori, aucun risque de collision de l'aéronef avec le terrain.
Il est intéressant alors de ne pas représenter les données les moins dangereuses à l'écran en appliquant un coefficient de transparence totale à ces zones. Le pilote peut apprécier la représentation cartographique, notamment les reliefs, ombrages et obstacles qui apparaissent alors à l'écran, au niveau des zones les moins dangereuses.

Un deuxième mode de combinaison consiste à superposer les deux graphiques en appliquant une loi de transparence couvrant tous les niveaux de danger. Ainsi, la couleur permet de situer le niveau de danger des données du TAWS et un coefficient de transparence appliqué à un niveau de danger est appliqué à chaque zone. Cette représentation permet au pilote d'apprécier, par transparence, la représentation cartographique située sous la représentation graphique des données du TAWS.

Un exemple peut être représenté par cinq couleurs représentant des niveaux de dangers différents comprenant des teintes, telles que le rouge vif, le rouge foncé, le vert clair, le vert foncé et le noir. Ces zones correspondent, par exemple, respectivement à des niveaux de danger tels que : « risque de collision à 10s », « risque de collision à 30s », « danger proche », « neutre », « sans risque ».
Si l'on considère à titre d'illustration trois coefficients de transparence, noté α₁, α₂, α₃, appliqués de telle manière que :
- α₁ est égal à 0 et correspond aux zones présentant le plus grand danger. La couleur rouge vif, des données de l'application TAWS, est prépondérante
- α₂ est égal à 0,5 et correspond aux zones présentant un danger moyen. Les couleurs rouge foncé, vert clair et vert foncé sont semi-transparente.
- α₃ est égal à 1, et correspond aux zones présentant le plus faible danger. La couleur noir est rendue transparente et n'apparaît plus.

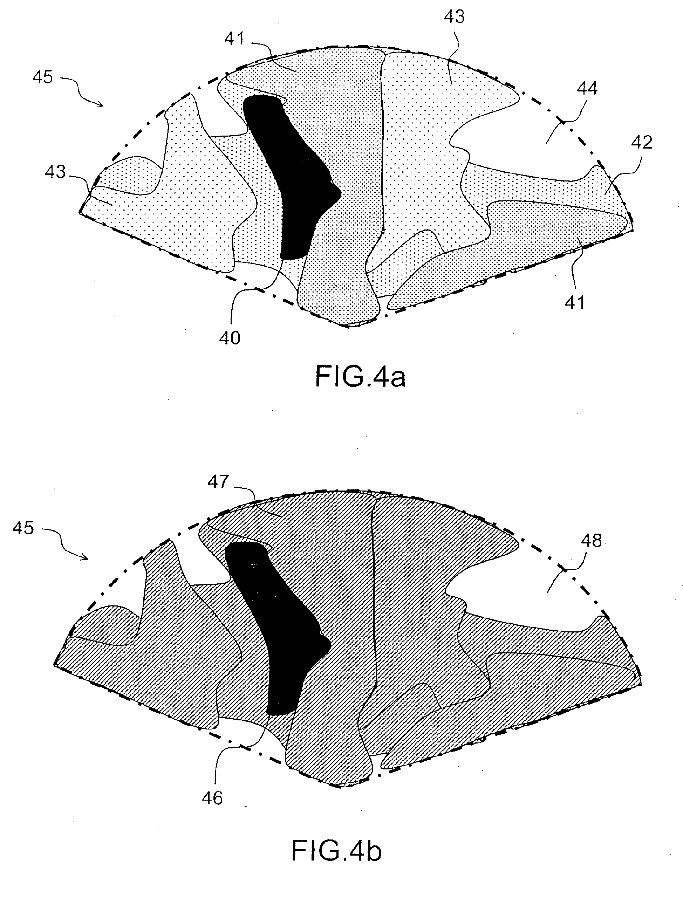

La figure 4a représente les zones de différents dangers issues de données dans un secteur angulaire 45. Ce secteur angulaire est superposé, dans le cadre du dispositif selon l'invention, aux données cartographiques.
Les différentes zones représentées sur la figure en pointillé représentent, pour une concentration donnée de pointillés, une zone de même danger. La densité des pointillés représentant une couleur. Sur la figure on distingue 5 couleurs différentes.
Ainsi la zone 40 correspond à une couleur rouge vif, elle représente la zone la plus dangereuse. Les zones 41 sont moins dangereuses, pour l'aéronef, que la zone 40. La couleur comme définie précédemment, peut-être choisi comme rouge foncé. Les zones 42 présentent un danger plus faible que les zones 41. La couleur représentant ce danger peut être par exemple le vert clair. Les zones 43 présentent un danger plus faible que les zones 42. leur couleur peut être vert foncé. Et enfin les zones 44, représentées sans pointillé, représentent une zone sans risque. La couleur de ces zones peut être par exemple le noir.

La figure 4b représente les zones affichées avec la loi de transparence définie comme précédemment.
Ainsi la zone 46, correspondante au danger le plus fort est rendue opaque. Les zones 47 correspondantes à des dangers intermédiaires sont rendues semi-transparente. Et enfin, les zones 48 correspondant au danger le plus faible sont rendues totalement transparentes. Dans ce dernier cas la couleur noire disparaît à l'affichage.

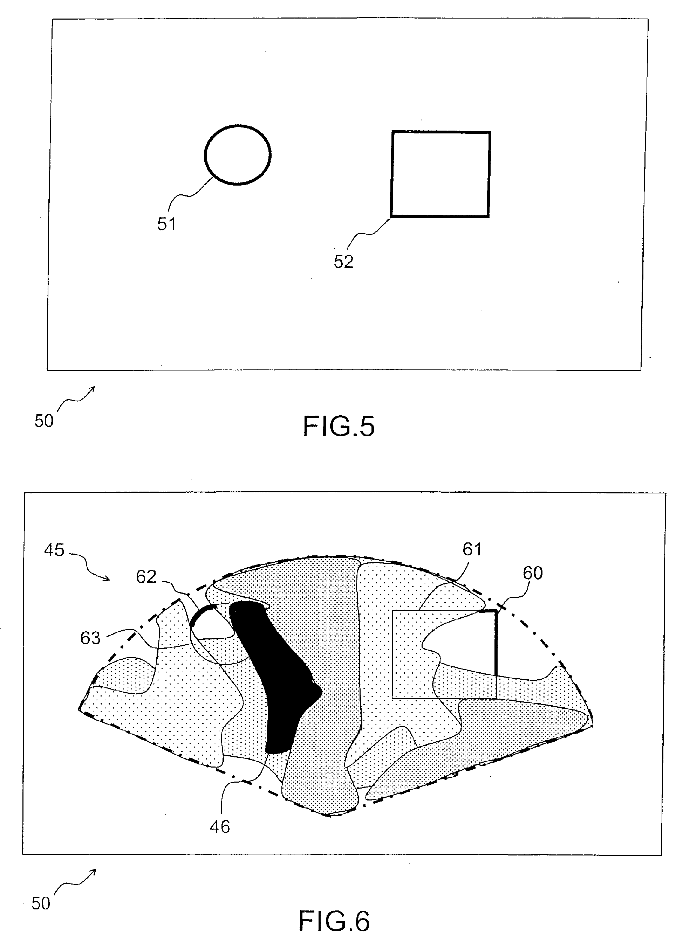

La figure 5 représente une représentation graphique des données cartographiques. Cette représentation est simplifiée à des formes géométriques élémentaires afin d'obtenir une meilleure lisibilité.
Le cadre 50 affiché comprenant les données cartographiques comprend un cercle rouge 51 et un rectangle marron 52. La représentation des couleurs n'est pas nécessaire.

La figure 6 est la représentation graphique des données environnementales, par exemple celle de l'application TAWS, superposées aux données cartographiques sur un même écran de visualisation.
Le cercle est composé :
- d'un arc de cercle masqué par les données de l'application TAWS de la zone 46, ladite zone étant rendue opaque,
- d'un arc de cercle 62 entièrement visible, la zone 48, figure 4b, étant rendue transparente, et enfin
- d'un arc 63 visible par semi-transparence par superposition des données des zones 47.
Le rectangle est composé :
- d'une partie 60 entièrement visible, la zone 48, figure 4b, étant rendue transparente,
- d'une partie 61 visible par semi-transparence par superposition des données des zones 47.

Le pilote distingue, dans ce cas, rapidement une zone dangereuse, telle que la zone 46, qui est mise en évidence par superposition complète d'une couleur rouge rendue opaque sur les données de terrain.
Concernant la zone couvrant un espace sans danger, le pilote peut apprécier la topologie du terrain par transparence totale. Par ailleurs, les zones de dangers intermédiaires ont l'avantage de représenter les données de terrain et les données environnementales par semi-transparence.

Dans un autre cas d'exemple, la loi de transparence peut être progressive. En utilisant les mêmes notations que précédemment, α₁ est égal à 0, α₂ est égal à 0,25, α₃ est égal à 0,50, α₄ est égal à 0,75 et α₅ est égal à 1.
Cette loi de transparence privilégie de manière linéaire la représentation des données environnementales en fonction du danger qui se présente à l'aéronef.

Il est possible d'appliquer une combinaison de couleurs de manière à ce que l'ensemble de la représentation des données soit opaque est couvre les données cartographiques.

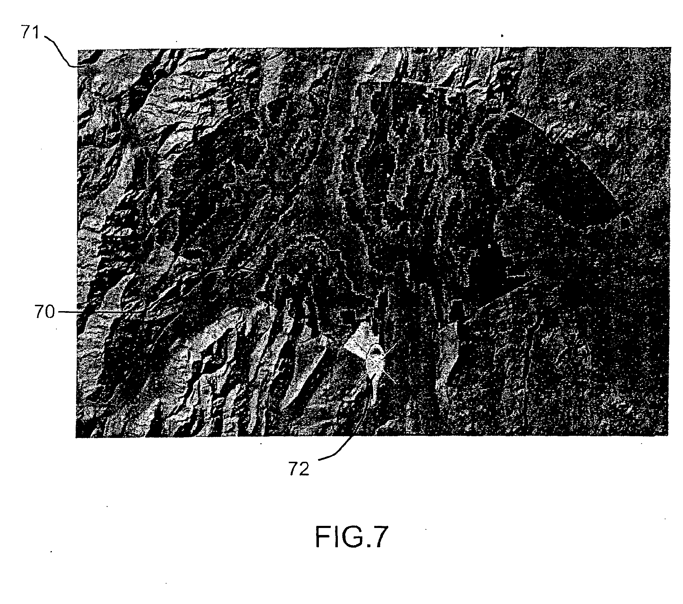

La figure 7 représente les données 70 de l'application TAWS représentant un secteur angulaire situé devant l'aéronef 72. Ces données sont superposées aux données cartographiques 71. On distingue sous les données TAWS le relief représenté par les données cartographiques.
Dans les calculs la référence du secteur angulaire est ici l'aéronef, mais ce point aurait pu être n'importe quel point de l'espace, pris comme référence de calcul. Par exemple, il est possible de réaliser des prédictions en extrapolant la position de l'aéronef et en considérant des données de prédiction, du type données météorologiques ou d'altimétries par exemple.
De la même manière il est possible de reconstituer un parcours en considérant des positions passées de l'aéronef et des données sauvegardées.

Par ailleurs, le nombre de types de dangers différents, allant du plus faible au plus fort, peut être plus important. Le codage de cette information n'est pas limité en théorie. Un codage « fin », c'est à dire d'un grand nombre de types de danger différents, permettra au pilote de distinguer un dégradé de couleurs à l'écran représentant des zones de dangerosité différentes.

Par ailleurs, la représentation qui est superposée aux données cartographiques, comprenant des lois de transparence, n'est pas nécessairement liée à la structure des données elles-même. L'application TAWS est un cas de réalisation détaillé. Le dispositif selon l'invention peut, tout aussi bien, s'appliquer à des données météorologiques de type les données de l'application WXR ou une autre application.

## Revendications

1. Dispositif de visualisation de l'environnement aérien pour aéronef, comprenant des moyens de visualisation, un calculateur avionique, des moyens de génération d'images et des moyens de calculs comprenant :
• une première ressource de traitement de données, les données étant une représentation graphique de l'environnement aérien composée de zones colorées, chaque couleur étant associée à un niveau de danger pour l'aéronef, lesdites données étant appelées données environnementales ;
• une seconde ressource de traitement de données, lesdites données étant appelées données cartographiques, représentant des données numériques de terrain,
**caractérisé en ce que**:
• les données environnementales numérisent un secteur angulaire (θ0) de part et d'autre du cap d'un aéronef, ledit secteur angulaire ayant une portée constante (L) et un point d'origine définie par un point de référence et ;
• le dispositif comporte un mélangeur graphique permettant à la représentation graphique issue des données environnementales de se superposer à la représentation des données cartographiques sur un même écran de visualisation, chaque zone d'une même couleur de la représentation de données environnementales ayant un coefficient de transparence fonction du niveau de danger.

2. Dispositif de visualisation selon la revendication 1, **caractérisé en ce que** le point de référence est la position courante de l'aéronef.

3. Dispositif de visualisation selon la revendication 1, **caractérisé en ce que** le point de référence est une référence de calcul des données.

4. Dispositif de visualisation selon l'une quelconque des revendications 1 à 3, **caractérisé en ce que** la représentation numérique des données environnementales est symétrique par rapport au cap de l'aéronef.

5. Dispositif selon l'une quelconque des revendications 1 à 4, **caractérisé en ce que** le secteur angulaire est composé d'un nombre de radiales (Nr), ayant chacune une portée (L), une ouverture (θ₁), de centre le point de référence, l'espacement entre deux radiales étant défini par un second angle (θ₁/2) égal à la demi-ouverture.

6. Dispositif selon l'une quelconque des revendications 1 à 5, **caractérisé en ce que** les données environnementales sont des données discrétisés par niveau de danger.

7. Dispositif selon la revendication 6, **caractérisé en ce que** les zones de danger sont discrétisées en fonction des risques de collision de l'aéronef.

8. Dispositif selon l'une quelconque des revendications 1 à 7, **caractérisé en ce que** les données environnementales sont des données de prédiction de collision, tel que les données provenant du système TAWS, dont la terminologie anglo-saxonne est Terrain Awareness Warning System.

9. Dispositif selon l'une quelconque des revendications 1 à 7, **caractérisé en ce que** les données environnementales sont des données météorologiques, tel que les données provenant du système WXR, dont la terminologie anglo-saxonne est Weather Radar System.

10. Dispositif graphique selon l'une quelconque des revendications 1 à 9, **caractérisé en ce que** la loi de transparence attribue une transparence totale au niveau de plus faible de danger, et donc n'est pas représenté par les moyens de visualisation.

11. Dispositif graphique selon l'une quelconque des revendications 1 à 9, **caractérisé en ce que** la loi de transparence attribue une opacité totale au niveau de danger le plus élevé.

## Claims

1. A device for displaying the aerial environment for aircraft, comprising display means, an avionics computer, image generating means and calculating means comprising:
a first data processing resource, the data being a graphical representation of the aerial environment composed of coloured zones, each colour being associated with a danger level for the aircraft, said data being referred to as environmental data;
a second data processing resource, said data being referred to as cartographic data, representing digital terrain data,
**characterised in that**:
the environmental data digitises an angular sector (θ0) on either side of the heading of an aircraft, said angular sector having a constant range (L) and a point of origin defined by a point of reference and;
the device comprises a graphical mixer allowing the graphical representation generated from the environmental data to be superposed on the representation of the cartographic data on the same display screen, with each zone of the same colour as the representation of the environmental data having a transparency coefficient that depends on the danger level.

2. The display device according to claim 1, **characterised in that** the point of reference is the current position of the aircraft.

3. The display device according to claim 1, **characterised in that** the point of reference is a calculation reference of the data.

4. The display device according to any one of claims 1 to 3, **characterised in that** the digital representation of the environmental data is symmetrical relative to the heading of the aircraft.

5. The device according to any one of claims 1 to 4, **characterised in that** the angular sector is composed of a number of radials (Nr), each having a range (L), an opening (0₁), and with a point of reference as the centre, the space between two radials being defined by a second angle (θ₁/2) equal to half of the opening.

6. The device according to any one of claims 1 to 5, **characterised in that** the environmental data is data which is discretised per danger level.

7. The device according to claim 6, **characterised in that** the danger zones are discretised depending on the risks of collision of the aircraft.

8. The device according to any one of claims 1 to 7, **characterised in that** the environmental data is collision prediction data, such as data originating from a TAWS system (Terrain Awareness Warning System).

9. The device according to any one of claims 1 to 7, **characterised in that** the environmental data is meteorological data, such as data originating from a WXR system (Weather Radar System).

10. The graphics device according to any one of claims 1 to 9, **characterised in that** the transparency rule attributes total transparency to the lowest danger level, and it is thus not shown by the display means.

11. The graphics device according to any one of claims 1 to 9, **characterised in that** the transparency rule attributes total opacity to the highest danger level.

## Patentansprüche

1. Vorrichtung zum Anzeigen der Luftumgebung für ein Luftfahrzeug, die Anzeigemittel, einen Luft- und Raumfahrtrechner, Bilderzeugungsmittel und Rechenmittel umfasst, die Folgendes beinhalten:
eine erste Datenverarbeitungsressource, wobei die Daten eine grafische Darstellung der aus farbigen Zonen zusammengesetzten Luftumgebung sind, wobei jede Farbe mit einer Gefahrenstufe für das Luftfahrzeug assoziiert ist, wobei die Daten als Umgebungsdaten bezeichnet werden;
eine zweite Datenverarbeitungsressource, wobei die Daten als kartografische Daten bezeichnet werden, die digitale Geländedaten repräsentieren,
**dadurch gekennzeichnet, dass**:
die Umgebungsdaten einen Winkelsektor (θ0) auf beiden Seiten des Kurses eines Luftfahrzeugs digitalisieren, wobei der Winkelsektor eine konstante Reichweite (L) und einen durch einen Referenzpunkt definierten Ursprungspunkt hat;
die Vorrichtung einen Grafikmischer hat, der es zulässt, die von den Umgebungsdaten erzeugte grafische Darstellung auf die Darstellung der kartografischen Daten auf demselben Anzeigeschirm zu legen, wobei jede Zone mit derselben Farbe wie die Darstellung der Umgebungsdaten einen Transparenzkoeffizienten hat, der von der Gefahrenstufe abhängig ist.

2. Anzeigevorrichtung nach Anspruch 1, **dadurch gekennzeichnet, dass** der Referenzpunkt die aktuelle Position des Luftfahrzeugs ist.

3. Anzeigevorrichtung nach Anspruch 1, **dadurch gekennzeichnet, dass** der Referenzpunkt eine Berechnungsreferenz der Daten ist.

4. Anzeigevorrichtung nach einem der Ansprüche 1 bis 3, **dadurch gekennzeichnet, dass** die digitale Darstellung der Umgebungsdaten symmetrisch zum Kurs des Luftfahrzeugs ist.

5. Anzeigevorrichtung nach einem der Ansprüche 1 bis 4, **dadurch gekennzeichnet, dass** der Winkelsektor aus einer Zahl von Radiallinien (Nr) besteht, jeweils mit einer Reichweite (L), einer Öffnung (θ₁), mit dem Referenzpunkt als die Mitte, wobei der Abstand zwischen zwei Radiallinien durch einen zweiten Winkel (θ₁/2) definiert wird, der gleich der Hälfte der Öffnung ist.

6. Vorrichtung nach einem der Ansprüche 1 bis 5, **dadurch gekennzeichnet, dass** die Umgebungsdaten Daten sind, die nach Gefahrenstufen diskretisiert sind.

7. Vorrichtung nach Anspruch 6, **dadurch gekennzeichnet, dass** die Gefahrenzonen je nach Risiken einer Kollision des Luftfahrzeugs diskretisiert werden.

8. Vorrichtung nach einem der Ansprüche 1 bis 7, **dadurch gekennzeichnet, dass** die Umgebungsdaten Kollisionsvorhersagedaten sind, wobei solche Daten von einem TAWS-System (Terrain Awareness Warning System) stammen.

9. Vorrichtung nach einem der Ansprüche 1 bis 7, **dadurch gekennzeichnet, dass** die Umgebungsdaten meteorologische Daten sind, wobei solche Daten von einem WXR-System (Weather Radar System) stammen.

10. Grafikvorrichtung nach einem der Ansprüche 1 bis 9, **dadurch gekennzeichnet, dass** die Transparenzregel der niedrigsten Gefahrenstufe totale Transparenz zuordnet, d.h. von den Anzeigemitteln nicht angezeigt wird.

11. Grafikvorrichtung nach einem der Ansprüche 1 bis 9, **dadurch gekennzeichnet, dass** die Transparenzregel der höchsten Gefahrenstufe totale Opazität zuordnet.
